# FASCICULE DE BREVET EUROPEEN

(11) **EP 2 734 436 B1**
(45) Date de publication et mention de la délivrance du brevet: **19.08.2015**
(21) Numéro de dépôt: 12735155.9
(22) Date de dépôt: 16.07.2012
(51) Int. Cl.: B63B 17/00

(54) **NAVIRE ÉQUIPÉ D'UN SYSTÈME DE STOCKAGE DE CARBURANT ET PROCÉDÉ CORRESPONDANT**
SCHIFF MIT EINEM BRENNSTOFFSPEICHERSYSTEM UND ENTSPRECHENDES VERFAHREN
SHIP PROVIDED WITH A FUEL STORAGE SYSTEM, AND CORRESPONDING METHOD

(30) Priorité: 22.07.2011 FR 1156694
(43) Date de publication de la demande: 28.05.2014
(73) Titulaire: STX France S.A., 44600 Saint Nazaire (FR)
(72) Inventeur: LORANG, Matthieu, F-44320 Saint Pere En Retz (FR)
(74) Mandataire: Regimbeau
(86) Numéro de dépôt international: PCT/EP2012/063928
(87) Numéro de publication internationale: WO 2013/014020

(56) Documents cités:
- WO-A1-2007/147931
- WO-A1-2008/000898
- WO-A1-2011/053164
- US-A- 3 158 193
- US-A- 3 409 040
- US-A- 4 602 599
- US-A- 4 653 552

## Description

L'invention concerne un système de stockage de carburant pour un navire.

En particulier, l'invention concerne un système de stockage de gaz cryogénique, comme par exemple le gaz naturel ou l'hydrogène pour un navire de commerce, tel qu'un navire marchand, un navire à passagers, un cargo ou encore un navire de service.

L'hydrogène est un combustible d'avenir qui peut être utilisé soit dans un moteur à combustion, soit dans une pile à combustible. Quelques navires démonstrateurs utilisent déjà ce combustible associé à des piles à combustible et des systèmes de stockage sous pression (plusieurs centaines de bar).

Le gaz naturel est un combustible fossile composé d'hydrocarbures (principalement du méthane). Il constitue une source d'énergie amenée à être de plus en plus utilisée dans l'industrie mondiale de l'énergie, étant donnée l'abondance des réserves mondiales.

Il a pour avantage d'être de faible coût et de produire peu de gaz nocifs pour l'environnement par rapport au fuel lourd utilisé dans la plupart des navires de commerce.

En particulier, la combustion du gaz naturel réduit la pollution en dioxyde de carbone, en NOx (monoxyde et dioxyde d'azote, etc.) et ne produit pas d'oxyde de souffre ni de particules.

L'utilisation de ce carburant est donc amenée à se développer, notamment dans le domaine des transports maritimes.

Divers systèmes de stockage de gaz naturel ont déjà été proposés.

Par exemple, certains navires sont munis de réservoirs de gaz naturel en phase gazeuse comprimé à une pression de plusieurs centaines de bars. Le rapport entre la quantité de gaz et son volume est cependant important, et n'est pas adapté à des navires devant effectuer des longues distances.

Pour pallier ce problème, l'utilisation de gaz naturel liquéfié (abrégé couramment en GNL) a donc été développée. En effet, une fois condensé à l'état liquide, le volume du gaz est réduit environ six cent fois par rapport à son volume d'origine.

Par exemple, les cuves utilisées sur les méthaniers, qui sont les navires servant à transporter du GNL en grandes quantités, stockent le gaz à pression atmosphérique et à une température proche de sa température d'ébullition. Le GNL est alors en équilibre liquide-vapeur, et le gaz qui s'évapore (phénomène connu sous le nom de « boil off » en anglais) est traité afin de maintenir une faible pression au sein la cuve.

Pour cela, les méthaniers mettent en oeuvre des compresseurs qui alimentent le système de production d'énergie du navire en gaz naturel en phase gazeuse.

Enfin, on a proposé de mettre en oeuvre des réservoirs de GNL sous pression, généralement de l'ordre d'une dizaine de bars, afin de stocker le GNL sur des périodes relativement longues et d'éviter les problèmes liés à la gestion du boil off.

Avantageusement, le gaz naturel liquéfié étant sous pression, il peut être directement utilisé par le système de production d'énergie du navire.

Néanmoins, ce dernier système est plus volumineux et lourd que le système de stockage des méthaniers, dans la mesure où les formes et épaisseurs des réservoirs doivent être adaptées pour résister à une pression plus élevée.

Le transport maritime mise néanmoins beaucoup sur l'utilisation du GNL comme carburant, étant donnés ses avantages notables. Toutefois, certaines contraintes subsistent quant à son utilisation.

Des réservoirs de ce genre sont décrits dans les demandes de brevet WO 2007/147931 et WO 2008/000898. Un inconvénient des réservoirs connus est que leur remplissage est une opération délicate, étant donné leurs dimensions et qu'il s'agit d'un liquide cryogénique, dont la température, à pression atmosphérique, est de l'ordre de -163°C. Son transfert nécessite donc des mesures lourdes en matière de sécurité, notamment afin de limiter les risques de fuites.

Ces questions de sécurité sont encore plus importantes lorsque le navire est dédié au transport de passagers. Les navires actuellement équipés de réservoirs GNL connus privilégient, par exemple, le remplissage des réservoirs de nuit, de manière à éviter au maximum la présence du public.

Par ailleurs, peu de ports sont munis de moyens d'approvisionnement en GNL, et il n'est pas concevable aujourd'hui que les navires de commerce, autres que les méthaniers, fassent leur plein de carburant dans les terminaux méthaniers. Il est donc nécessaire de faire appel à des camions citernes ou à des barges adaptées au transport de GNL, ou encore d'adapter l'itinéraire du navire afin de garantir son ravitaillement dans des stations.

Le document US-A-3 158 193 décrit les caractéristiques techniques du préambule de la revendication 1.

L'invention vise donc à améliorer les systèmes connus, et a pour objectif de proposer pour un navire, un système de stockage de carburant, notamment de gaz naturel liquéfié ou d'hydrogène liquéfié, permettant lors de son remplissage, de diminuer voire supprimer les risques de fuites à bord du navire et de maintenir la sécurité à bord et à proximité du navire.

Un autre objectif de l'invention est de proposer un système de stockage de carburant pouvant être adapté à tout type de navire, notamment aux navires de commerce.

Enfin, un objectif de l'invention est de proposer un système de stockage de carburant permettant au navire d'avitailler en carburant en tous lieux, sans moyens logistiques portuaires de levage tels que des grues.

Pour cela, l'invention propose un navire et un procédé tels que définis dans les revendications annexées.

Ainsi, le dit navire qui comprend un réseau d'alimentation en carburant, un système de stockage mobile et des moyens de production d'énergie connectés au dit réseau d'alimentation en carburant, ce carburant étant stocké dans ledit système de stockage mobile qui peut être débarqué du navire pour son remplissage ou remplacement, se caractérisant par le fait qu'il comprend en outre des cuves fixes permettant d'accroître les capacités de stockage de carburant et que ledit système mobile comprend au moins une cuve mobile qui alimente en carburant le réseau d'alimentation des moyens de production d'énergie ou les cuves fixes aux fins de remplissage.

Selon d'autres caractéristiques avantageuses et non limitatives de ce navire :
- le système de stockage a la forme d'un container ou d'une remorque de camion ;
- le carburant stocké dans le système est du gaz, tel que du gaz naturel ou de l'hydrogène, en phase liquide, et en ce que le système comporte une cuve cryogène adaptée pour maintenir le gaz liquéfié à une pression comprise entre environ 1 bar et environ 15 bars, de préférence environ 5 bars ;
- le système de stockage comporte en outre des moyens permettant de le connecter aux systèmes suivants du navire :
   - système électrique, de manière à assurer une connexion électrique entre le système de stockage et un système de commande du navire ;
   - système de sécurité du navire et
   - système de production d'énergie du navire.
- les moyens de connexion au système de production d'énergie comprennent une tuyauterie cryogène ;
- le système de stockage est entreposé dans une zone spécifique du navire qui est dédiée au transport de matières dangereuses ;
- le réseau d'alimentation des moyens de production d'énergie en carburant comprend :
   - un évaporateur adapté pour transformer le gaz liquéfié contenu dans le système de stockage en gaz en phase gazeuse ;
   - une pompe permettant d'alimenter l'évaporateur en gaz liquéfié à partir du système de stockage et
   - une tuyauterie adaptée pour transférer le gaz sous forme gazeuse de l'évaporateur vers les moyens de production d'énergie ;
- la pompe d'alimentation et éventuellement l'évaporateur sont mobiles avec le système de stockage ;
- il comprend en outre des moyens d'acheminement du système de stockage vers la zone spécifique ;
- les moyens d'acheminement sont un chemin roulant, une rampe et/ou un ascenseur ;
- il comprend en outre au moins une cuve de rétention recouverte d'une grille positionnée à distance du fond de la cuve de rétention, et en ce que le système de stockage est placé sur la grille.

Le procédé selon l'invention comprend les étapes suivantes :
- déconnecter le système de stockage de carburant du navire ;
- débarquer le système de stockage du navire ;
- remplacer le système de stockage débarqué par un système de stockage rempli de carburant, ou faire le remplissage en carburant du système de stockage débarqué ;
- embarquer le système de stockage rempli de carburant ; et
- connecter le système de stockage rempli de carburant au navire (20).

Avantageusement, le carburant est liquéfié, et l'étape de remplissage du système de stockage mobile est effectuée dans un terminal méthanier, une usine de liquéfaction ou une station de remplissage dédiée.

D'autres caractéristiques, buts et avantages de la présente invention apparaîtront mieux à la lecture de la description détaillée qui va suivre, et en regard des dessins annexés donnés à titre d'exemples non limitatifs et sur lesquels :
La figure 1 représente un navire comprenant un système de stockage de carburant;
La figure 2 représente un navire selon une première forme de réalisation de l'invention ;
La figure 3 représente un autre exemple de système mobile de stockage.
La figure 4 une deuxième forme de réalisation d'un navire de stockage selon l'invention ;

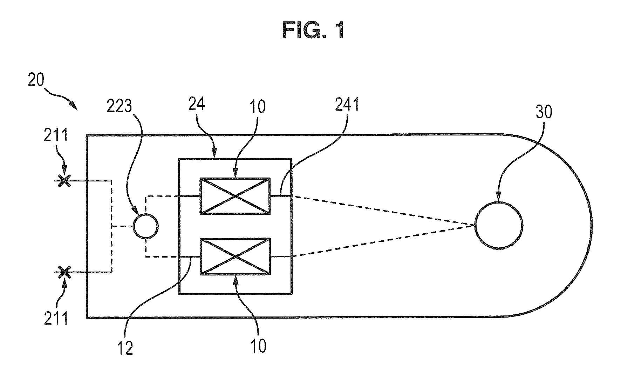

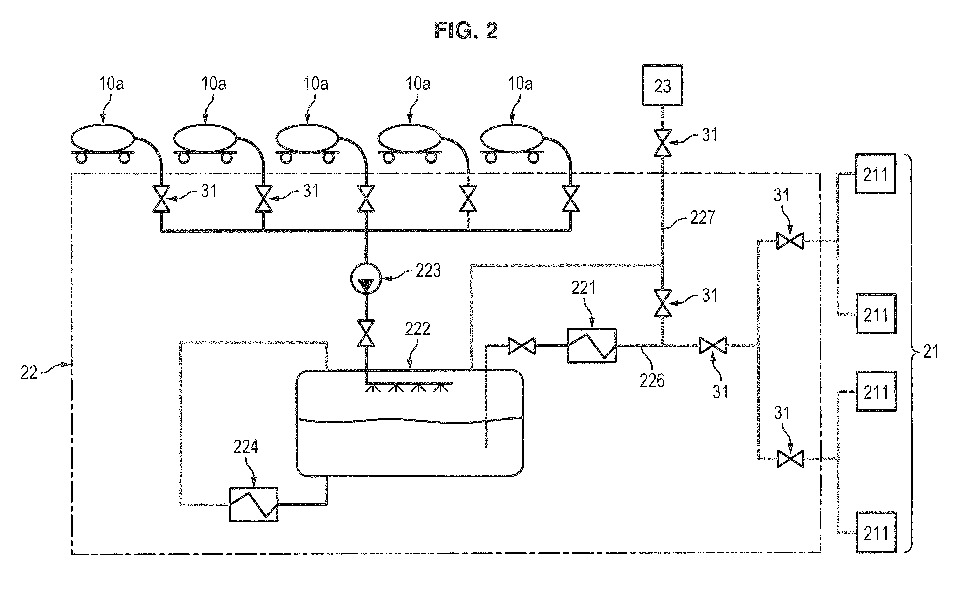

Comme représenté sur les figures 1 et 2, le navire 20 comprend des moyens de production d'énergie 21 fournis en carburant par des moyens d'alimentation 22, eux-mêmes reliés à un ou plusieurs systèmes de stockage de carburant 10. Comme visible dans la suite de la description, les indices a ou b seront donnés à ce système, en fonction de sa forme.

De préférence, le carburant est du gaz naturel liquéfié.

Néanmoins, l'invention n'est pas limitée à ce mode de réalisation, et les moyens de stockage peuvent également contenir par exemple de l'hydrogène sous forme liquide ou gazeuse, ou encore du gaz naturel en phase gazeuse.

Le système de stockage de carburant 10 est mobile, c'est-à-dire qu'il n'est pas fixé solidairement au navire 20 et peut être déplacé, déconnecté et débarqué du navire 20 à chaque avitaillement.

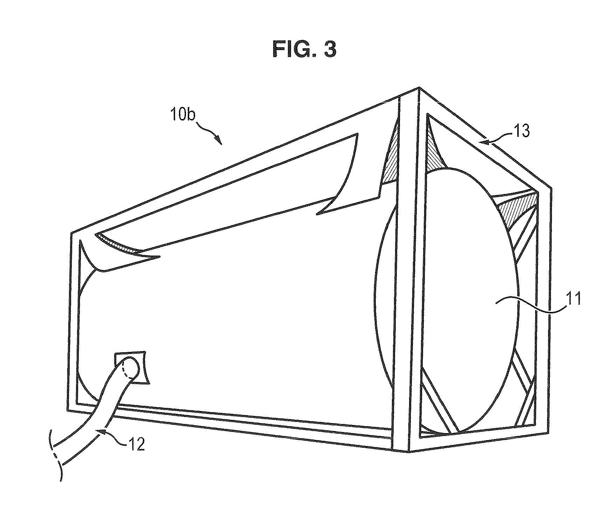

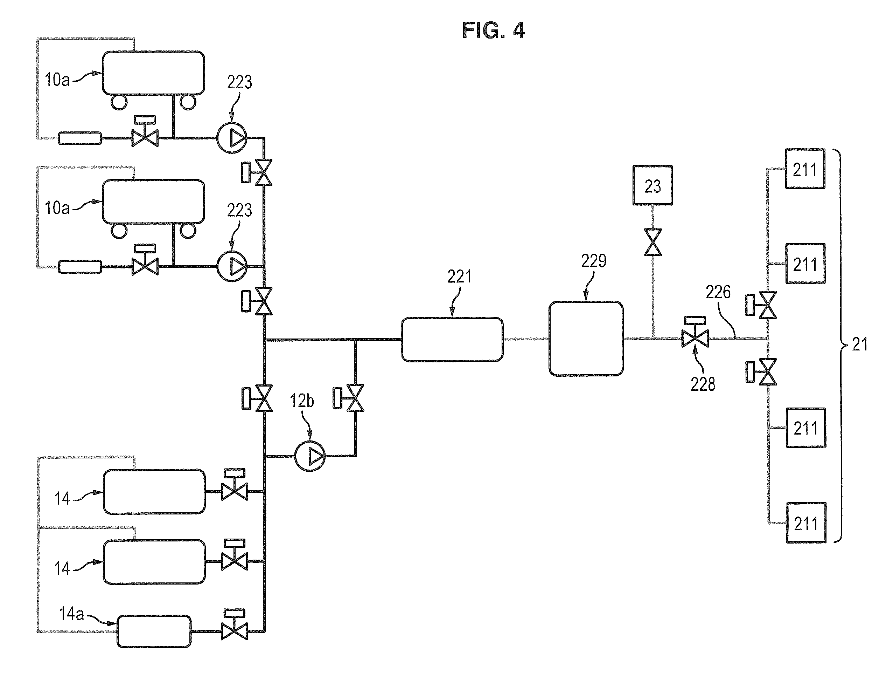

Selon une forme de réalisation, le système de stockage 10 se présente sous la forme d'une remorque de camion 10a (figures 2 et 4) ou d'un container 10b (figure 3).

Avantageusement, le système de stockage 10 comprend une cuve cryogénique 11, adaptée pour stocker le gaz en phase liquide sous une pression comprise entre 1 et 15 bars, de préférence à environ 5 bars, ainsi que des moyens de connexion de la cuve 11 aux moyens d'alimentation 22 du navire 20.

Par exemple, le système de stockage 10 comprend une tuyauterie cryogène 12 connectée à la cuve 11 par l'intermédiaire d'une connexion conçue pour permettre un transfert sécurisé du gaz en limitant les risques de pertes dudit gaz.

Le système 10 comprend en outre des capteurs et des automates, notamment des appareils de mesure et de détection du niveau de liquide, de température, de pression, etc. ainsi que des soupapes (vannes de régulation, soupape de surpression, etc.).

Une armature 13 assure de préférence la tenue mécanique et la manutention des différents éléments qui composent le système de stockage mobile.

Par exemple, dans le cas où le système de stockage se présente sous la forme d'une remorque de camion 10a, l'armature 13 inclut notamment l'ensemble des systèmes nécessaires au roulage sur route.

Par ailleurs, les moyens d'alimentation 22 comprennent au moins un évaporateur principal 221, alimenté par exemple par un réseau d'apport d'énergie thermique.

Optionnellement et comme représenté à la figure 4, une vanne de régulation 228 placée en aval de l'évaporateur permet de réguler le débit de gaz envoyé aux moyens de production d'énergie. Cette vanne est asservie à la pression en entrée des moteurs.

Optionnellement, un réservoir tampon 229 est placé entre l'évaporateur 221 et la vanne 228.

Le gaz est ensuite transféré par une tuyauterie 226 aux moyens de production d'énergie 21.

Selon une forme de réalisation préférée, une chaudière 23 est en outre connectée à la tuyauterie 226 en aval de l'évaporateur principal 221 de manière à recevoir également une partie du gaz transformé en phase gazeuse.

Selon l'invention et conformément à la figure 4, le système de stockage est composé de cuves mobiles 10a et de cuves fixes 14. Ces cuves fixes 14 permettent d'accroitre la capacité de stockage et de continuer à alimenter les moyens de production d'énergie 211 lorsque les cuves mobiles 10a sont déconnectées ou vides.

Les cuves fixes 14 sont maintenues sous pression à l'aide d'un évaporateur spécifique 14a. Elles sont soit à une pression compatible pour la fourniture de gaz aux moyens de production 211 (environ 7 bars), soit à une pression inférieure. Dans ce dernier cas, au moins une pompe 12b permet d'augmenter la pression à la valeur adéquate.

En fonctionnement nominal, le GNL alimentant les moyens de production d'énergie 211 provient des cuves mobiles 10a ou des cuves fixes 14 si les cuves mobiles 10a sont vides.

Les cuves fixes 14 sont alors remplies par le GNL des cuves mobiles 10a à l'avitaillement suivant, si nécessaire.

Afin qu'une unité de commande 30 du navire 20 puisse réguler le débit en carburant depuis l'ensemble des éléments du système de stockage 10 (et 14 selon la variante de l'installation), aux moyens de production d'énergie 21 en passant par la chaudière 23, chaque tuyauterie 226, et 227, est de préférence munie de commutateurs 31 (par exemple des vannes) actionnés par les moyens de commande 30.

De la sorte, les moyens de commande 30 peuvent ouvrir ou fermer le passage du carburant dans chaque tuyauterie, que ce soit sous forme liquéfiée ou gazeuse, par actionnement de vannes au niveau du système de stockage 10 ou du navire 20.

Dans le mode de réalisation illustré à la figure 4 annexée, le navire 20 comprend une pompe d'alimentation 223 par système mobile, chaque pompe d'alimentation 223 étant contrôlée par l'unité de commande 30 et reliée à l'évaporateur principal 221.

La zone spécifique 24 comporte également des moyens permettant de connecter électriquement le système de stockage au navire.

En particulier, la zone spécifique 24 comprend des moyens de connexion électrique 241 entre les systèmes de stockage et les moyens de commande du navire 30, de préférence conformes aux normes de sécurité en vigueur (telles que la directive ATEX).

Par exemple, les connexions électrique 241 relient l'ensemble des équipements de sécurité, de régulation et d'automatismes inclus dans le système de stockage mobile (appareils de mesure, de détection et de sécurité tels que les capteurs de niveau, de température, de pression, ou encore les vannes de sécurité, etc.) aux moyens de supervision et d'automatismes du navire 20.

En variante de la forme de réalisation de la zone spécifique 24 et des systèmes de stockage 10 décrits plus haut, la pompe d'alimentation et éventuellement l'évaporateur peuvent être mobiles avec le système de stockage et donc ne pas faire partie du navire.

En particulier, la zone spécifique 24 du navire ne comprend, dans cette variante de réalisation, que les tuyauteries nécessaires (et le cas échéant, les commutateurs) pour alimenter l'évaporateur 221 ou respectivement les systèmes de production d'énergie 21 et la chaudière 23.

Cette forme a pour avantage de ne pas nécessiter une adaptation trop importante du navire 20, mais alourdit la structure globale du système de stockage 10 en augmentant le nombre d'éléments mobiles.

Le gaz en phase liquide est alors vaporisé par l'évaporateur intégré au système de stockage mobile. Le gaz est alors transféré au navire 20 sous forme gazeuse.

Ainsi, le gaz étant fourni au navire 20 par le système de stockage 10 sous forme gazeuse, les risques de fuite sous forme liquide sont réduits voire supprimés, les raccords cryogéniques étant supprimés. Par ailleurs, les tuyauteries utilisées sur le navire 20 n'ont plus besoin d'être cryogènes.

Comme indiqué plus haut, et en relation avec la figure 4, le système de stockage est composée de cuves mobiles 10 et de cuves fixes 14. Ces cuves fixes 14 permettent d'accroitre la capacité de stockage et de continuer à alimenter les moyens de production d'énergie 211 lorsque les cuves mobiles 10a sont déconnectées ou vides.

Les cuves fixes 14 sont maintenues sous pression à l'aide d'un évaporateur spécifique. Elles sont soit à une pression compatible pour la fourniture de gaz au moyen de production 211 (environ 7 bars), soit à une pression inférieure. Dans ce dernier cas au moins une pompe 12b permet d'augmenter la pression à la valeur adéquate.

En fonctionnement nominal, le GNL alimentant les moyens de production d'énergie 211 provient des cuves mobiles 10a ou des cuves fixes 14 si les cuves mobiles 10a sont vides.

Les cuves fixes 14 sont alors remplies par le GNL des cuves mobiles 10a à l'avitaillement suivant, si nécessaire.

Afin de faciliter la mise en place du système de stockage 10, le navire 20 comprend de préférence un système d'embarquement (et de débarquement) adapté, permettant d'acheminer de manière sûre et rapide le système de stockage 10 vers la zone spécifique 24, en tous lieux.

Dans le cas où le système de stockage est un container 10b, le système d'embarquement comprend un système apte à récupérer le container 10b présenté au niveau d'une porte d'embarquement dédiée du navire 20, ainsi qu'un système de chemin roulant permettant de déplacer le container 10b à l'intérieur du navire jusqu'à la zone spécifique 24.

Le container 10b peut alors être amené au navire 20 soit par voie terrestre, soit par voie maritime, sur le côté ou à l'arrière du navire 20.

Dans le cas où le système de stockage est une remorque de camion 10a, le système d'embarquement comporte une rampe d'accès et éventuellement un ascenseur, afin de permettre à un camion d'amener la remorque 10a jusqu'à la zone spécifique 24 du navire 20.

Nous allons maintenant décrire la mise en oeuvre d'un système de stockage mobile 10 conforme à l'invention.

Pour cela et plus particulièrement en référence à la figure 2, nous nous placerons dans le cas d'un navire de commerce 20, comportant cinq systèmes de stockage de gaz naturel liquéfié sous forme de remorques de camion 10a, disposés en extérieur dans la zone 24 du navire dédiée au transport de matières dangereuses.

Dans un premier temps, le navire 20 embarque les camions-remorques par une rampe d'accès. Les camions déposent les remorques 10a sur le pont, de préférence sur la grille de la cuve de rétention, de manière adjacente aux raccords.

On connecte alors les remorques 10a au navire 20, en reliant la tuyauterie cryogène 12 de chaque remorque 10a à un des raccords, ainsi que l'ensemble des connexions électriques 241.

Les remorques 10a sont alors prêtes pour servir de réservoir de carburant au navire 20, alternativement ou simultanément.

En fonctionnement, la pompe d'alimentation 223 pompe du GNL d'une des remorques 10a, le transfère à l'évaporateur 221, qui transforme le GNL en phase vapeur avant de l'envoyer aux moyens de production d'énergie 21, et éventuellement à la chaudière 23. L'ensemble de ces étapes est contrôlé par le système de supervision et d'automatismes des moyens de commande 30.

En parallèle, dans le cas où le navire 20 comporte une ou plusieurs cuves fixes 14, le GNL des cuves mobiles peut y être transféré aux fins de remplissage.

Lorsque la première remorque 10a est vide, les moyens de commande changent de source de carburant (par exemple par l'intermédiaire des moyens de commutation 31). La pompe 223 alimente alors l'évaporateur principal 221 en GNL à partir d'une deuxième remorque 10a.

En variante, la pompe 223 alimente l'évaporateur principal 221 en puisant le GNL à partir de deux remorques 10a ou plus simultanément.

En variante, la pompe 12b alimente l'évaporateur principal 221 en puisant le GNL à partir d'une cuve fixe 14 ou plus simultanément.

En variante, les pompes 223 et 12b alimentent simultanément l'évaporateur principal 221 en puisant le GNL respectivement à partir d'une ou plusieurs remorques 10a et d'une ou plusieurs cuves fixes 14.

Lorsque tout ou partie des réserves de GNL ont été épuisées sur le navire 20, on procède au ravitaillement comme suit.

Dans un premier temps, on débarque les remorques de GNL vides (ou partiellement vides).

Pour cela, on déconnecte les tuyauteries cryogènes 12 des raccords ainsi que les connexions électriques 241, et des camions débarquent les remorques 10a par la rampe d'accès.

Les remorques 10a sont alors rechargées en GNL, soit sur place (dans le cas où le lieu d'amarrage est équipé d'une station de remplissage dédiée), soit dans une usine de liquéfaction ou dans un terminal méthanier, où elle est transportée par camion, train ou navire (selon la distance à parcourir entre le lieu d'amarrage et le point de rechargement en GNL).

Avantageusement, la mobilité du système de stockage 10 (ici, la remorque 10a) permet de garantir des conditions de sécurités optimales lors de leur remplissage en GNL, dans la mesure où le personnel et le lieu de remplissage sont qualifiés spécifiquement pour cette tâche. On limite également la présence du public, et donc les risques d'accidents.

Dans un deuxième temps, les remorques 10a une fois remplies sont réembarquées à bord du navire 20 par les camions, puis reconnectées comme précédemment décrit au navire 20.

En variante, le navire dispose, à ses ports d'escales, de remorques 10a de rechange ayant été remplies en prévision de l'arrivée du navire 20. De la sorte, lorsque les remorques du navire 20 sont vides, elles sont débarquées du navire 20 et remplacées par des remorques pleines de GNL.

Le ravitaillement en carburant du navire 20 est donc nettement accéléré et peut être fait dans n'importe quel lieu, puisque le remplissage des remorques 10a (qui peut être long étant donné le peu de stations de remplissage dédiées) est effectué alors que le navire 20 est en mer.

## Revendications

1. Navire (20) comprenant un réseau d'alimentation (22) en carburant, un système de stockage mobile (10) et des moyens de production d'énergie (21) connectés au dit réseau d'alimentation (22) en carburant, ce carburant étant stocké dans ledit système de stockage mobile (10) qui peut être débarqué du navire (20) pour son remplissage ou remplacement, **caractérisé par le fait qu'**il comprend en outre des cuves fixes (14) permettant d'accroître les capacités de stockage de carburant et que ledit système mobile comprend au moins une cuve mobile (10) qui alimente en carburant le réseau d'alimentation (22) des moyens de production d'énergie (21) ou les cuves fixes (14) aux fins de remplissage.

2. Navire (20) selon la revendication 1, **caractérisé en ce que** le système de stockage (10) a la forme d'un container (10b) ou d'une remorque de camion (10a).

3. Navire (20) selon l'une des revendications précédentes, **caractérisé en ce que** le carburant stocké dans le système (10) est du gaz, tel que du gaz naturel ou de l'hydrogène, en phase liquide, et **en ce que** le système (10) comporte une cuve cryogène (11) adaptée pour maintenir le gaz liquéfié à une pression comprise entre environ 1 bar et environ 15 bars, de préférence environ 5 bars.

4. Navire (20) selon l'une des revendications précédentes, **caractérisé en ce que** le système de stockage (10) comporte en outre des moyens permettant de le connecter aux systèmes suivants du navire :
- système électrique, de manière à assurer une connexion électrique entre le système de stockage (10) et un système de commande (30) du navire ;
- système de sécurité du navire (20); et
- système de production d'énergie (21) du navire.

5. Navire (20) selon la revendication 4, **caractérisé en ce que** les moyens de connexion au système de production d'énergie (21) comprennent une tuyauterie cryogène (12).

6. Navire (20) selon l'une des revendications précédentes, **caractérisé en ce que** le système de stockage (10) est entreposé dans une zone spécifique (24) du navire (20) qui est dédiée au transport de matières dangereuses.

7. Navire (20) selon la revendication 6, **caractérisé en ce que** le réseau d'alimentation (22) des moyens de production d'énergie (21) en carburant comprend :
- un évaporateur (221) adapté pour transformer le gaz liquéfié contenu dans le système de stockage (10) en gaz en phase gazeuse ;
- une pompe (223) permettant d'alimenter l'évaporateur (221) en gaz liquéfié à partir du système de stockage (10) ; et
- une tuyauterie (226) adaptée pour transférer le gaz sous forme gazeuse de l'évaporateur vers les moyens de production d'énergie (21).

8. Navire (20) selon la revendication 7 **caractérisé en ce que** la pompe d'alimentation (223) et éventuellement l'évaporateur (221) peuvent être mobiles avec le système de stockage (10).

9. Navire (20) selon l'une des revendications 1 à 8, **caractérisé en ce qu'**il comprend en outre des moyens d'acheminement du système de stockage (10) vers la zone spécifique (24).

10. Navire (20) selon la revendication 9, **caractérisé en ce que** les moyens d'acheminement sont un chemin roulant, une rampe et/ou un ascenseur.

11. Navire (20) selon l'une des revendications 1 à 10, **caractérisé en ce qu'**il comprend en outre au moins une cuve de rétention recouverte d'une grille positionnée à distance du fond de la cuve de rétention, et **en ce que** le système de stockage (10) est placé sur la grille.

12. Procédé d'alimentation en carburant d'un navire (20) selon l'une des revendications 1 à 11, **caractérisé en ce qu'**il comprend les étapes suivantes :
- déconnecter le système de stockage de carburant(10) du navire (20) ;
- débarquer le système de stockage (10) du navire (20) ;
- remplacer le système de stockage (10) débarqué par un système de stockage (10) rempli de carburant, ou faire le remplissage en carburant du système de stockage débarqué (10) ;
- embarquer le système de stockage (10) rempli de carburant ; et
- connecter le système de stockage (10) rempli de carburant au navire (20).

13. Procédé selon la revendication 12, **caractérisé en ce que** le carburant est liquéfié, et **en ce que** l'étape de remplissage du système de stockage mobile (10) est effectuée dans un terminal méthanier, une usine de liquéfaction ou une station de remplissage dédiée.

## Patentansprüche

1. Schiff (20), das ein Kraftstoffversorgungsnetz (22), ein mobiles Speichersystem (10) und Energieproduktionsmittel (21), die mit dem Kraftstoffversorgungsnetz (22) verbunden sind, umfasst, wobei dieser Kraftstoff in dem mobilen Speichersystem (10) gespeichert ist, das vom Schiff (20) für sein Füllen oder seinen Austausch entladbar ist, **dadurch gekennzeichnet, dass** es ferner feste Tanks (14) umfasst, die eine Vergrößerung der Kraftstoffspeicherkapazitäten erlauben, und dass das mobile System mindestens einen mobilen Tank (10) umfasst, der das Versorgungssystem (22) der Energieproduktionsmittel (21) oder die festen Tanks (14) zwecks Füllen mit Kraftstoff versorgt.

2. Schiff (20) nach Anspruch 1, **dadurch gekennzeichnet, dass** das Speichersystem (10) die Form eines Containers (10b) oder eines Lkw-Anhängers (10a) hat.

3. Schiff (20) nach einem der vorangehenden Ansprüche, **dadurch gekennzeichnet, dass** der in dem System (10) gespeicherte Kraftstoff Gas wie Erdgas oder Wasserstoff in flüssiger Phase ist und dass das System (10) einen Kühltank (11) aufweist, der ausgebildet ist, um das verflüssigte Gas auf einem Druck von zwischen zirka 1 bar und zirka 15 bar inklusive, vorzugsweise zirka 5 bar, zu halten.

4. Schiff (20) nach einem der vorangehenden Ansprüche, **dadurch gekennzeichnet, dass** das Speichersystem (10) ferner Mittel aufweist, die erlauben, es mit den folgenden Systemen des Schiffs zu verbinden:
- elektrisches System, um eine elektrische Verbindung zwischen dem Speichersystem (10) und einem Steuersystem (30) des Schiffs zu sichern,
- Sicherheitssystem des Schiffs (20) und
- Energieproduktionssystem (21) des Schiffs.

5. Schiff (20) nach Anspruch 4, **dadurch gekennzeichnet, dass** die Verbindungsmittel mit dem Energieproduktionssystem (21) eine Kühlleitung (12) umfassen.

6. Schiff (20) nach einem der vorangehenden Ansprüche, **dadurch gekennzeichnet, dass** das Speichersystem (10) in einem speziellen Bereich (24) des Schiffs (20) untergebracht ist, der für den Transport von Gefahrgut bestimmt ist.

7. Schiff (20) nach Anspruch 6, **dadurch gekennzeichnet, dass** das Versorgungssystem (22) der Energieproduktionsmittel (21) mit Kraftstoff umfasst:
- einen Verdampfer (221), der ausgebildet ist, um das im Speichersystem (10) enthaltene verflüssigte Gas in Gas in gasförmiger Phase umzuwandeln,
- eine Pumpe (223), die die Versorgung des Verdampfers (221) mit verflüssigtem Gas ab dem Speichersystem (10) erlaubt, und
- eine Rohrleitung (226), die ausgebildet ist, um das Gas in gasförmiger Form von Verdampfer zu den Energieproduktionsmitteln (21) zu übertragen.

8. Schiff (20) nach Anspruch 7, **dadurch gekennzeichnet, dass** die Versorgungspumpe (223) und eventuell der Verdampfer (221) mit dem Speichersystem (10) mobil sein können.

9. Schiff (20) nach einem der Ansprüche 1 bis 8, **dadurch gekennzeichnet, dass** es ferner Beförderungsmittel des Speichersystems (10) zu dem speziellen Bereich (24) umfasst.

10. Schiff (20) nach Anspruch 9, **dadurch gekennzeichnet, dass** die Beförderungsmittel eine Transportbahn, eine Rampe und/oder ein Aufzug sind.

11. Schiff (20) nach einem der Ansprüche 1 bis 10, **dadurch gekennzeichnet, dass** es ferner mindestens einen Rückhaltetank umfasst, der mit einem Gitter bedeckt ist, das beabstandet vom Boden des Rückhaltetanks positioniert ist, und dass das Speichersystem (10) auf dem Gitter platziert ist.

12. Verfahren zur Versorgung mit Kraftstoff eines Schiffs (20) nach einem der Ansprüche 1 bis 11, **dadurch gekennzeichnet, dass** es die folgenden Schritte umfasst:
- Lösen des Kraftstoffspeichersystems (10) vom Schiff (20),
- Entladen des Speichersystems (10) vom Schiff (20),
- Austausch des entladenen Speichersystems (10) durch ein mit Kraftstoff gefülltes Speichersystem (10) oder Füllen des entladenen Speichersystems (10) mit Kraftstoff,
- Verladen des mit Kraftstoff gefüllten Speichersystems (10) und
- Verbinden des mit Kraftstoff gefüllten Speichersystems (10) mit dem Schiff (20).

13. Verfahren nach Anspruch 12, **dadurch gekennzeichnet, dass** der Kraftstoff verflüssigt ist und dass der Füllschritt des mobilen Speichersystems (10) in einem Methanterminal, einer Verflüssigungsanlage oder einer speziellen Füllanlage durchgeführt wird.

## Claims

1. A vessel (20) comprising a fuel supply network (22), a mobile storage system (10) and energy production means (2) connected to said fuel supply network (22), said fuel being stored in said mobile storage system (10) which can be disembarked from the vessel (20) for filling or replacement, **characterized by** the fact that it also includes fixed tanks (14) allowing the fuel storage capacity to be increased, and that said mobile system includes at least one mobile tank (10) which supplies fuel to the supply network (22) of the energy production means (21) or to the fixed tanks (14) for the purpose of refilling them.

2. The vessel (20) according to Claim 1, **characterized in that** the storage system (10) takes the form of a container (10b) or of a truck trailer (10a).

3. The vessel (20) according to one of the foregoing claims, **characterized in that** the fuel stored in the system (10) is gas, such as natural gas or hydrogen, in the liquid phase, and **in that** the system (10) comprises a cryogenic tank (11) designed to maintain the liquefied gas at a pressure comprised between about 1 bar and about 15 bars, preferably about 5 bars.

4. The vessel (20) according to one of the foregoing claims, **characterized in that** the storage system (10) also comprises means allowing it to be connected to the following systems of the vessel:
- an electrical system, so as to provide an electrical connection between the storage system (10) and a control system (30) of the vessel;
- a safety system of the vessel (20); and
- an energy production system (21) of the vessel.

5. The vessel (20) according to Claim 4, **characterized in that** the means of connection to the energy production system (21) include cryogenic piping (12).

6. The vessel (20) according to one of the foregoing claims, **characterized in that** the storage system (10) is placed in a specific zone (24) of the vessel (20) dedicated to transporting hazardous materials.

7. The vessel (20) according to Claim 6, **characterized in that** the network (22) supplying the energy production means (21) with fuel includes:
- an evaporator (221) designed to transform the liquefied gas contained in the storage system (10) in to gas in the gas phase;
- a pump (223) allowing the evaporator (221) to be supplied with liquefied gas from the storage system (10); and
- a pipe (226) designed for transferring the gas as gas from the evaporator to the energy production means (21).

8. The vessel (20) according to Claim 7, **characterized in that** the feed pump (223) and the evaporator (221), if any, can be mobile with the storage system (10).

9. The vessel (20) according to one of Claims 1 through 8, **characterized in that** it also includes means for routing the storage system (10) to the specific zone (24).

10. The vessel (20) according to Claim 9, **characterized in that** the routing means are a traveling track, a ramp and/or an elevator.

11. The vessel (20) according to one of Claims 1 through 10, **characterized in that** it also includes at least one holding tank covered with a grid positioned at a distance from the bottom of the holding tank, and **in that** the storage system (10) is placed on the grid.

12. A method for supplying fuel to a vessel (20) according to one of Claims 1 through 11, **characterized in that** it includes the following steps:
- disconnecting the fuel storage system (10) from the vessel (20);
- disembarking the storage system (10) from the vessel (20);
- replacing the disembarked storage system (10) with a storage system (10) filled with fuel, or filling the disembarked storage system (10) with fuel;
- embarking the storage system (10) filled with fuel; and
- connecting the storage system (10) filled with fuel to the vessel (20).

13. The method according to Claim 12, **characterized in that** the fuel is liquefied, and **in that** the step of filling the mobile storage system (10) is carried out in a methane carrier terminal, a liquefaction plant or a dedicated filling station.
